# EUROPÄISCHE PATENTSCHRIFT

(11) **EP 2 729 236 B1**
(45) Veröffentlichungstag und Bekanntmachung des Hinweises auf die Patenterteilung: **16.10.2019**
(21) Anmeldenummer: 12734885.2
(22) Anmeldetag: 04.07.2012
(51) Int. Cl.: B01D 53/54, B01D 53/56, B01D 53/86

(54) **VERFAHREN UND VERWENDUNG EINER VORRICHTUNG ZUR STICKOXIDARMEN OXIDATION VON BRENNSTOFF-STICKSTOFF-VERBINDUNGEN**
METHOD AND USE OF A DEVICE FOR OXIDIZING FUEL-NITROGEN COMPOUNDS WHILE GENERATING LOW LEVELS OF NITROGEN OXIDES
PROCÉDÉ ET EMPLOI D'UN DISPOSITIF POUR L'OXYDATION PAUVRE EN OXYDE D'AZOTE DE COMPOSÉS COMBUSTIBLES COMPRENANT DE L'AZOTE

(30) Priorität: 04.07.2011 DE 102011106441
(43) Veröffentlichungstag der Anmeldung: 14.05.2014
(73) Patentinhaber: Luft- und Thermotechnik Bayreuth GmbH, 95497 Goldkronach (DE)
(72) Erfinder: CARLOWITZ, Otto, 38678 Clausthal-Zellerfeld (DE); REINDORF, Torsten, 38678 Clausthal-Zellerfeld (DE); EULER, Stefan, 83052 Bruckmühl (DE); SCHRICKER, Bernd, 95615 Marktredwitz (DE)
(74) Vertreter: Gauss, Nikolai
(86) Internationale Anmeldenummer: PCT/EP2012/062955
(87) Internationale Veröffentlichungsnummer: WO 2013/004711

(56) Entgegenhaltungen:
- EP-A1- 0 800 855
- DE-A1- 3 324 668
- DE-A1-102010 027 883
- DE-T2- 60 103 724
- US-A- 5 173 278
- US-A- 5 500 194
- US-A1- 2011 041 481

## Beschreibung

Die Erfindung betrifft ein Verfahren und die Verwendung einer Vorrichtung zur stickoxidarmen Oxidation von Brennstoff-Stickstoff-Verbindungen (BSV) enthaltenden Abgasen aus einer Kafeerösterei.

### Stand der Technik

Abgase, die organische und/oder anorganische Substanzen enthalten, die neben Wasserstoff, ggf. Kohlenstoff und ggf. Sauerstoff aber auch Stickstoff, üblicherweise chemisch in entsprechende Substanzen gebunden, aufweisen dürfen auf Grund von gesetzlichen Vorgaben nur bestimmte Mengen an bestimmten chemischen Verbindungen enthalten. So gibt es sowohl für Stickoxide als auch für Schwefeloxide und andere Verbindungen entsprechende Emissionswerte, die z. B. in der TA-Luft in Deutschland definiert sind.

Entsprechend müssen solche Abgase vor Emission behandelt werden, um die Emission entsprechender Schadstoffe in diesen Abgasen gering zu halten. Zu diesen Schadstoffen zählen insbesondere auch Stickstoffoxide, z. B. NO, NO₂ oder N₂O. Deren Emission ist aus Toxizitätsgründen, insbesondere in Bezug auf NO₂, oder aus Gründen des hohen Treibhauspotentials (z. B. für N₂O) so klein wie möglich zu halten. Dabei führt eine Oxidation von Brennstoff-Stickstoff-Verbindungen (im Folgenden mit BSV abgekürzt) in der Regel zu einer vermehrten Bildung von Stickoxiden. Brennstoff-Stickstoff-Verbindungen (BSV) sind anorganische (z.B. Ammoniak) oder organische chemische Verbindungen (z.B. Amine, Koffeine, Amide, Anilin), die Stickstoff in ihrer chemischen Bindung aufweisen. Enthalten oxidierbare Substanzen chemisch gebundenen Stickstoff in organischen oder anorganischen Stickstoffverbindungen, werden während des Verbrennungsprozesses Stickoxide gebildet. Hier zeigt sich ein großes Problem von Brennstoff-Stickstoff-Verbindungen insbesondere bei thermischen aber auch katalytischen Abgasreinigungsanlagen, nämlich die erhöhte Bildung von Stickoxidverbindungen die somit zu erhöhten Emissionen von Stickoxiden beitragen.

Thermische Abgasreinigungsanlagen mit regenerativer Abluftvorwärmung (RNV-Anlagen) werden vielfach zur Behandlung kohlenwasserstoffhaltiger Abgase (Ablüfte, d. h. sauerstoffhaltige Abgase) eingesetzt. Häufig enthalten die zu oxidierenden Substanzen aber auch Stickstoff in ihrer chemischen Bindung, der sich zu einem erheblichen Teil in Stickoxide umgewandelt wird und damit zur Überschreitung der Emissionswerte der TA-Luft führen kann.

Daher sind umfangreiche Maßnahmen notwendig, diese erhöhten Mengen an Stickoxiden zu vermindern. Eine Stickoxidverminderung kann durch verschiedene Maßnahmen erreicht werden. Maßnahmen können solche sein die vor der Verbrennung greifen, so genannte tertiäre Maßnahmen, Maßnahmen, die gezielt die Prozessführung während der Verbrennung beeinflussen, so genannte Primärmaßnahmen aber auch Maßnahmen, die nach der Verbrennung die Stickoxidkonzentration mindern, so genannte Sekundärmaßnahmen. Die Verwendung von reduzierend wirkenden katalytischen Abgasreinigungsanlagen gehören zu diesen Maßnahmen. D. h. aus dem Stand der Technik ist bekannt, dass zur Verringerung der Emission von Stickoxiden sowohl katalytische als auch nicht katalytische Reduktionsverfahren - SCR-Verfahren (selective catalytic reduction) bzw. SNCR-Verfahren (selective non-catalytic reduction) - eingesetzt werden können. Üblicherweise beinhalten diese Verfahren ein Zumischen von stickstoffhaltigen Bindungen, die als Reduktionsmittel wirken. Übliche Reduktionsmittel sind Ammoniak (NH₃) oder Harnstoff.

Das SCR-Verfahren basiert dabei auf der Verwendung eines Reduktionskatalysators, wie Metalloxiden, und benötigt Arbeitstemperaturen im Bereich zwischen 200°C und 400°C. Mit Hilfe des zugesetzten stickstoffhaltigen Reduktionsmittels, wie Ammoniak, das Stickstoffoxid zu elementaren Stickstoff und Wasser umgesetzt, werden die Stickoxide abgebaut. Beispiele für SCR-Verfahren im Allgemeinen, bei denen stickstoffhaltige Reduktionsmittel hinzugefügt werden, werden in der DE 601 03 724 T2 und US 2011/0041481 A1 beschrieben. Hier werden bei der Abgasbehandlung bei Dieselmotoren entsprechend Ammoniak zugedüst und NOx aufnehmende Katalysatoren beschrieben. Des Weiteren betreffen diese Dokumente keine BSV enthaltenen Abgase. Alternativ kann das SNCR-Verfahren, das ein thermisches Verfahren darstellt, genutzt werden. Dabei werden die Abgase auf Temperaturen von 850°C bis 1050°C ggf. bei höheren Sauerstoffpartialdrücken, erwärmt, um im Rahmen einer Gasphasenreaktion in Anwesenheit von stickstoffhaltigen Reduktionsmitteln, wie Ammoniak oder Harnstoff, Stickoxide zu N₂ und Wasser umzusetzen.

In der US 5,173,278 ist ein Verfahren für das Regenerieren eines Crading-Katalysators für kohlenwasserstoffhaltige Gase und Flüssigkeiten beschrieben. Um zu vermeiden, dass beim Regenerieren des Katalysators Brennstoff-Stickstoff-Verbindungen (BSV) enthaltende Gase an die Umwelt freigesetzt werden, wird in der US 5,173,278 vorgeschlagen, die bei dem Regenerieren entstehenden Abgase in einem Katalysator mit zusätzlich zugeführtem Sauerstoff oder Ammoniak zu versetzen. Die DE 10 2010 027 883 A1 offenbart Kupferkatalysatoren für die Verringerung von Stickoxiden in Abgasen.

Allerdings tritt häufig das Problem auf, dass entsprechende Reduktionsmittel im Produktionsbetrieb nur bedingt eingesetzt werden sollen. Dies ist z. B. im Bereich der Lebensmittelindustrie, wie im Bereich der Kaffeeröstung, aus hygienischen Gründen der Fall. Daher besteht ein Bedarf neue Verfahren und Verwendung einer Vorrichtungen bereitzustellen, mit denen in Abgasen vorhandene Stickstoffoxide reduziert werden, um die Vorgaben zur Emission dieser Stickoxide zu erfüllen. Ein Ersatz mit anderen bekannten Reduktionsmitteln wie CO zeigt insbesondere bei Anwesenheit von Sauerstoff ebenfalls keine Wirkung, da sich das CO sofort zu CO₂ umsetzt. Vor allem die Anwesenheit von Sauerstoff stellt hier ein Problem bei der Reduktion von Stickoxid-Emissionen dar.

Aufgabe der vorliegenden Erfindung ist daher das Reduzieren der Stickoxide in Abgasen, die in der Lebensmittelindustrie im Bereich der Kaffeeröstung entstehen.

Diese Aufgabe wir durch das Verfahren nach Anspruch 1 und die Verwendung einer Vorrichtung nach Anspruch 10 gelöst.

### Kurze Beschreibung der Erfindung

Vorliegend wird ein neues Verfahren zur stickoxidarmen Oxidation von bei der Kaffeeröstung anfallenden Abgasen mit gasförmigen Brennstoff-Stickstoff-Verbindungen bereitgestellt. Überraschend zeigte sich, dass Abgase, die Brennstoff-Stickstoff-Verbindungen enthalten, geeignet sind, in stickoxidhaltigen Gasen vorhandenes Stickoxid zu reduzieren. D. h., es zeigte sich überraschend, dass die BSV selbst als Reduktionsmittel genutzt werden können, um stickoxidarme Emissionen von Abgasen zu ermöglichen. Dabei kann das BSV-haltige Abgas auch sauerstoffhaltig sein. Das erfindungsgemäße Verfahren zur stickoxidarmen Oxidation von Brennstoff-Stickstoff-Verbindungen (BSV) enthaltenden Gasen umfasst dabei die Schritte des Zuführens von BSV-haltigem Abgas zu einem ersten Behandlungsabschnitt zur Umsetzung in stickoxidhaltiges Abgas, Zuführen von BSV-haltigem Abgas zu dem erhaltenen stickoxidhaltigen Abgas und Behandeln dieses Gemisches aus stickoxidhaltigem Abgas und BSV-haltigem Abgas mit reduktiver Wirkung in einem zweiten Behandlungsabschnitt zur Reduktion der Stickoxide im Abgas.

Das erfindungsgemäße Verfahren zeichnet sich dadurch aus, dass in dem zweiten Behandlungsabschnitt keine Reduktionsmittel, wie Ammoniak etc. extern zugeführt werden.

Weiterhin betrifft die Erfindung die Verwendung einer Vorrichtung zur stickoxidarmen Oxidation von Brennstoff-Stickstoff-Verbindungen enthaltenden Gasen.

### Figurenbeschreibung

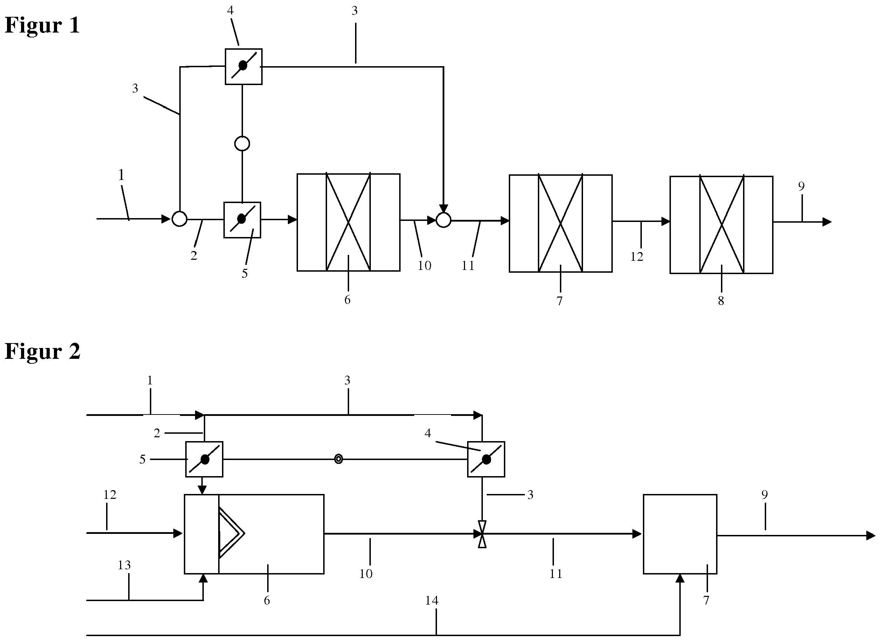

Figur 1 zeigt eine erste Ausführungsform des erfindungsgemäßen Verfahrens und einer Vorrichtung bei der eine Katalysator-unterstützte Umsetzung zu stickoxidhaltigen Abgas und eine anschließende Umsetzung dieser stickoxidhaltigen Abgase mit den BSV-haltigen Abgasen erfolgt.
Figur 2 zeigt eine zweite Ausführungsform einer Vorrichtung zur Durchführung eines erfindungsgemäßen Verfahrens. Diese zweite Ausführungsform beruht auf einer ersten thermischen Behandlung des BSV-haltigen Abgases zur Generierung von stickoxidhaltigem Abgas und einer zweiten thermischen Behandlung des Gemisches aus BSV-haltigem Abgas und stickoxidhaltigem Abgas zur Reduktion des Stickoxidanteils in dem Abgas.

### Ausführliche Beschreibung der Erfindung

Die vorliegende Erfindung betrifft ein Verfahren zur stickoxidarmen Oxidation von Brennstoff-Stickstoff-Verbindungen (BSV) enthaltenden Gasen umfassend die Schritte:
i) Zuführen von BSV-haltigen Abgasen zu einem ersten Behandlungsabschnitt zur Umsetzung in stickoxidhaltiges Abgas;
ii) Zuführen von BSV-haltigem Abgas zu dem stickoxidhaltigen Abgas aus Schritt i);
iii) Behandeln des Gemisches aus stickoxidhaltigem Abgas aus Schritt i) und dem BSV-haltigen Abgas unter reduktiven Bedingungen in einem zweiten Behandlungsabschnitt zur Reduktion der Stickoxide im Abgas.

Insbesondere ist es erfindungsgemäß möglich, die Behandlung in Schritt iii) auch bei Anwesenheit von Sauerstoff durchzuführen. D.h. selbst bei Sauerstoffkonzentrationen, wie sie in der Luft vorliegen, also z.B. bei Konzentrationen von bis zu 21 Vol-% Sauerstoff, kann die Reduktion der Stickoxide erfindungsgemäß erfolgen.

Das erfindungsgemäße Verfahren kann dabei auf Katalysatorbasis durchgeführt werden. Alternativ kann das Verfahren durch thermische Behandlung erfolgen, d. h. es kann eine selektive katalytische Reduktion oder eine selektive nicht-katalytische Reduktion erfolgen. Anstelle der bisher eingesetzten Reduktionsmittel, in der Regel Ammoniak und Harnstoff, wird vorliegend allerdings das BSV-haltige Abgas selbst eingesetzt. Dadurch ist es möglich dieses Verfahren auch in Produktionsstätten einzusetzen, wo der Einsatz von Ammoniak oder Harnstoff oder anderen nicht zugelassenen Verbindungen nicht erlaubt bzw. nicht erwünscht ist. Es erfolgt in dem zweiten Behandlungsabschnitt kein externer Zusatz von Reduktionsmitteln.

Des Weiteren ist in der Regel der externe Zusatz von Reduktionsmitteln nicht notwendig. Vielmehr wird das Abgas selbst als Reduktionsmittel genutzt.

In einer bevorzugten Ausführungsform handelt es sich um eine selektive katalytische Reduktion. Dabei erfolgt die Behandlung derart, dass die Behandlung im ersten Behandlungsabschnitt eine Katalysator-vermittelnde Behandlung zur Umsetzung in stickoxidhaltiges Abgas ist. Üblicherweise handelt es sich hierbei um einen Oxidationskatalysator, der Stickoxide bildet.

Bevorzugt findet dabei im zweiten Behandlungsabschnitt ebenfalls eine Katalysator-vermittelte Behandlung statt. Bevorzugt ist diese eine Behandlung mit einem Reduktionskatalysator unter reduktiven Bedingungen zur Reduktion der Stickoxide, gegebenenfalls bei Anwesenheit von Sauerstoff. Bevorzugt handelt es sich dabei insbesondere um einen Katalysator, der keine NOx aufnehmende Substanz aufweist.

Als Katalysatoren können z.B. die folgenden Kombinationen in den ersten und zweiten und gegebenenfalls dritten Behandlungsabschnitten eingesetzt werden.

Der erste Katalysator ist üblicherweise ein Oxidationskatalysator, wobei dieser das Abgas allerdings nicht vollständig durchoxidieren muss. Der zweite Katalysator im zweiten Abschnitt ist üblicherweise ein Reduktionskatalysator. Der dritte Katalysator ist bevorzugt ein perfekter Oxidationskatalysator, der auch noch Restkohlenwasserstoffe vollständig umsetzt, so dass die Emissionsbegrenzungen eingehalten werden. Z.B. werden Begrenzungen von 50 mg/m³ an Gesamtkohlenstoff eingehalten.

In einer weiteren bevorzugten Ausführungsform ist das erfindungsgemäße Verfahren eines, bei dem eine thermische Behandlung des Abgases durchgeführt wird. Bevorzugt wird dabei in dem ersten Behandlungsschritt eine Brennkammer zur Oxidation der stickstoffhaltigen Verbindungen im BSV-enthaltenen Abgas zur Herstellung von stickoxidhaltigem Abgas eingesetzt. Diese Brennkammer wird bevorzugt unter Zusatz von Brennstoff und ggf. Luft auf eine Oxidationstemperatur von in der Regel > 800°C gebracht. Unter diesen Bedingungen wird das BSV-haltige Abgas in ein stickoxidhaltiges Abgas umgewandelt. Die Bedingungen können dabei so gewählt werden, wie sie für bekannte SNCR-Verfahren genutzt werden. In einer bevorzugten Ausführungsform hiervon wird bei der thermischen Behandlung eine erste Brennkammer mit Einlässen für einen Brennstoff und ggf. weiteren Einlässen für Luft eingesetzt.

Bevorzugt findet die Reduktion in dem zweiten Behandlungsschritt bei einer thermischen Behandlung in einer Gasphasenoxidationskammer ggf. unter Zusatz von Brennstoff statt. Dabei wird das Gemisch aus stickoxidhaltigem Abgas und dem BSV-enthaltenen Abgas unter bekannten Bedingungen im Rahmen einer Gasphasenreaktion umgesetzt, um ein stickoxidarmes Abgas zu erhalten. Kein externes Reduktionsmittel wird in dem zweiten Behandlungsabschnitt zusätzlich hinzugefügt.

Im erfindungsgemäßen Verfahren wird das BSV-haltige Abgas vor Einbringen in den ersten Behandlungsabschnitt aufgeteilt in einen ersten Anteil und einen zweiten Anteil. Dabei wird nur einer dieser Anteile in den ersten Behandlungsabschnitt geführt, während der zweite Anteil unbehandelt dem nach dem ersten Behandlungsabschnitt erhaltenen stickoxidhaltigen Abgas zugeführt wird. Die Aufteilung kann dabei mit Hilfe von Ventilen oder Klappen geschehen. Diese Ventile oder Klappen sind ggf. über eine Regelungseinheit gesteuert.

Das erfindungsgemäße Verfahren kann ggf. weiterhin eine abschließende Behandlung (in einem dritten Behandlungsabschnitt) des Abgases in einen Oxidationskatalysator umfassen. Der Oxidationskatalysator dient einer Oxidation von noch vorhandenen Kohlenwasserstoffen im Abgas. Geeignete Einrichtungen sind dem Fachmann bekannt.

Das erfindungsgemäße Verfahren ist insbesondere geeignet, in der Lebensmittelindustrie eingesetzt zu werden. In diesen Bereichen ist die Zufuhr von externen Reduktionsmitteln nicht gewollt und teilweise nicht erlaubt. Bevorzugt wird das erfindungsgemäße Verfahren dazu verwendet, koffeinhaltiges, d.h. BSV-haltiges Abgas zu reinigen. Abgase aus Kaffeeröstereien enthalten Koffein und Derivate hiervon. Koffein ist ein stickstoffhaltiger Kohlenwasserstoff, der ideal als Brennstoff-Stickstoff-Verbindung eingesetzt werden kann. In Abhängigkeit von Kaffeesorte und Stärke der Röstung kann das Koffein dabei in unterschiedlichen Anteilen im Abgas vorliegen. Erfindungsgemäß ist es möglich unter Nutzung dieser Brennstoff-Stickstoff-Verbindungen als Reduktionsmittel die Emission der Stickoxide im Abgas mit Hilfe des erfindungsgemäßen Verfahrens deutlich zu verringern. Eine Verringerung der Stickoxidkonzentration in den Abgasen gelingt dabei um mehr als 50 % im Vergleich zu katalytisch-oxidativen Verfahren.

Das erfindungsgemäße Verfahren ist daher eines, das geeignet ist, BSV-haltige Abgase aus einer Kaffeerösterei zu behandeln um stickoxidarme Abgase zu erhalten.

In einem weiteren Aspekt richtet sich die vorliegende Anmeldung auf die Verwendung von Vorrichtungen zur stickstoffarmen Oxidation von Brennstoff-Stickstoff-Verbindungen (BSV enthaltenden Abgasen). Diese Vorrichtung umfasst eine Einrichtung zum Leiten eines BSV-haltigen Abgases in eine erste Einrichtung zur Umsetzung dieses Gases in stickoxidhaltiges Abgas, eine erste Einrichtung zur Umsetzung des BSV-haltigen Abgases in stickoxidhaltiges Abgas, Leitung zum Verbringen des behandelten stickoxidhaltigen Abgases zu einer zweiten Einrichtung zur Reduktion des stickoxidhaltigen Abgases, zweite Einrichtung zur Behandlung des stickoxidhaltigen Abgases und ggf. Leitung und Einrichtung zur Oxidation vorhandener Kohlenwasserstoffe. Die Vorrichtung zeichnet sich dadurch aus, dass die Leitung zum Verbringen des stickoxidhaltigen Abgases zur zweiten Einrichtung eine Vorrichtung zur Beimischung von BSV-haltigem Abgas, das nicht in der ersten Einrichtung behandelt wurde, aufweist.

Ggf. kann die Vorrichtung weiterhin eine Einrichtung zur Zufuhr und Aufteilung des BSV-haltigen Abgases in einen ersten Anteil in einen zweiten Anteil aufweisen. Diese Einrichtung ist dabei vor der ersten Einrichtung zur Umsetzung des BSV-haltigen Abgases in stickoxidhaltiges Abgas angeordnet.

Die Vorrichtung zum Beimischen des BSV-haltigen Abgases zum stickoxidhaltigen Abgas kann ein ggf. geregeltes Ventil sein.

Es ist dabei bevorzugt, dass die erste Einrichtung zur Umsetzung des BSV-haltigen Abgases in stickoxidhaltiges Abgas eine Brennkammer, die ggf. eine Zufuhr von Brennstoff und/oder Luft aufweist, oder einen Oxidationskatalysator aufweist.

In einer weiteren bevorzugten Ausführungsform ist die zweite Einrichtung zur Behandlung des Gemisches aus stickoxidhaltigen Abgas und BSV-haltigem Abgas eine Gasphasenoxidationskammer ggf. mit Einlässen zur Zufuhr von Brennstoff oder ein Reduktionskatalysator.

Die Gasphasenoxidationskammer oder der Reduktionskatalysator, genauso wie die Brennkammer oder der Oxidationskatalysator, als Einrichtungen der Vorrichtung, können gemäß bekannten Ausführungsformen ausgebildet sein.

Weiterhin kann die erfindungsgemäße Einrichtung zusätzlich eine weitere Einrichtung zur vollständigen Oxidation von weiterhin noch vorhanden Kohlenwasserstoffen umfassen.

Die Vorrichtung ist besonders geeignet zur Verwendung in der Behandlung von Abgasen aus Kaffeeröstereien. Entsprechend richtet sich die vorliegende Anmeldung in einem weiteren Aspekt auf die Verwendung einer Vorrichtung oder eines erfindungsgemäßen Verfahrens zur Behandlung von Abgasen aus Kaffeeröstereien zur stickstoffarmen Oxidation dieser.

Die Erfindung wird weiter unter Bezugnahme auf die Figuren ausgeführt. Dabei ist in der Figur 1 eine bevorzugte Ausführungsform des erfindungsgemäßen Verfahrens dargestellt. In dieser bevorzugten Ausführungsform wird eine katalysatorvermittelte Behandlung des Abgases durchgeführt. Dabei wird das BSV-haltige Abgas 1 zunächst aufgeteilt. Diese Aufteilung kann mit Hilfe eines Klappensystems 4, 5 erfolgen. Mit Hilfe dieses Systems kann das Abgasmengenverhältnis durch die Leitungen 2 und 3 reguliert werden. Die Leitung 2 wird dabei einem ersten Bearbeitungsabschnitt 6, vorliegend einem Katalysator, zugeführt, während die Leitung 3 um diesen Bearbeitungsschritt (z. B. Katalysator) 6 herumgeführt wird. Das BSV-haltige Abgas wird im Katalysator 6, bevorzugt einem Oxidationskatalysator, zu einem stickoxidhaltigen Abgas umgesetzt. Dieses stickoxidhaltige Abgas wird dann in der Leitung 10 mit dem BSV-haltigen Abgas aus der Leitung 3 durch eine Einrichtung zusammengeführt und bevorzugt vermischt. Die Leitung 11 führt dieses Gemisch aus BSV-haltigem Abgas und stickoxidhaltigem Abgas in einen zweiten Behandlungsabschnitt, vorliegend einem Katalysator, bevorzugt einem Reduktionskatalysator 7 zu. Dort werden die Stickoxide in stickoxidhaltigem Abgas durch die BSV aus dem BSV-haltigen Abgas reduziert. Bevorzugt ist es dabei nicht möglich, extern Reduktionsmittel zu dem Katalysator 7 oder vorher in die Leitung 11 zuzuführen.

Ggf. kann dieses stickoxidarme Abgas über die Leitung 12 in einen weiteren Oxidationskatalysator 8 geführt werden, um eine Restoxidation von noch vorhandenen Kohlenwasserstoffen durchzuführen. Das so behandelte stickoxidarme Abgas verläßt die Vorrichtung dann über die Ableitung 9.

Eine weitere bevorzugte Ausführungsform ist in der Figur 2 dargestellt. In der Figur 2 ist ein Verfahren auf Basis einer thermischen Behandlung ausgeführt. Hier wird das BSV-haltige Abgas über die Leitung 1 der Vorrichtung zugeführt. Dabei wird das BSV-haltige Abgas über die Leitung 2 und 3 mittels einem Klappsystem oder Ventilsystem aufgeteilt. Das BSV-haltige Abgas aus der Leitung 2 wird dem ersten Behandlungsabschnitt, vorliegend einer Brennkammer 6 zugeführt. Dieser Brennkammer wird ggf. Brennstoff über die Leitung 12 und ggf. Luft über die Leitung 13 zugeführt, um die geeigneten Oxidationsbedingungen zu erreichen. Das so gebildete stickoxidhaltige Abgas wird über die Leitung 10 aus dem ersten Behandlungsabschnitt abgeführt und mit Hilfe einer Einrichtung mit dem BSV-haltigen Abgas aus der Leitung 3 vermischt. Dieses Vermischen kann mit Hilfe einer geeigneten Einrichtung z. B. einer fluidischen Mischeinrichtung erfolgen. Dieses Gemisch aus stickoxidhaltigem Abgas und BSV-haltigem Abgas wird dann über die Leitung 11 zu dem zweiten Behandlungsabschnitt 7 geführt. Vorliegend handelt es sich bei dem zweiten Behandlungsabschnitt um eine Gasphasenoxidationskammer in der die Reduktionsreaktion erfolgt. Um die notwendigen Temperaturen zu erreichen wird ggf. Brennstoff über die Leitung 14 zugeführt. Das so behandelte stickoxidstoffarme Abgas wird dann über die Ableitung 9 aus der Anlage entfernt. Es ist dabei bevorzugt, dass kein externes Reduktionsmittel über die Leitungen 10 oder 11 dem zweiten Behandlungsabschnitt 7 zugeführt wird.

Die genauen Reaktionsbedingungen sowie die entsprechenden weiteren Parameter wie Menge und Verhältnis von stickoxidhaltigem Abgas und BSV-haltigem Abgas kann der Fachmann durch einfache Versuche bestimmen.

### Bezugszeichenliste

- 1: Zufuhr von BSV-haltigem Abgas
- 2: Zuleitung zum ersten Bearbeitungsabschnitt
- 3: Leitung
- 4: Klappsystem
- 5: Klappsystem
- 6: Erster Bearbeitungsabschnitt
- 7: Zweiter Bearbeitungsabschnitt
- 8: Weiterer Bearbeitungsabschnitt (Oxidationskatalysator)
- 9: Ableitung
- 10: Leitung
- 11: Leitung
- 12: Brennstoff-Zuleitung
- 13: Sauerstoff-Zuleitung (Luft)
- 14: Brennstoff-Zuleitung

## Patentansprüche

1. Verfahren zur stickoxidarmen Oxidation von Brennstoff-Stickstoff-Verbindungen (BSV) enthaltenden Abgasen aus einer Kaffeerösterei
**gekennzeichnet durch**
folgende Schritte:
i) Zuführen von BSV-haltigem Abgasen zu einem ersten Behandlungsabschnitt zur Umsetzung in stickoxidhaltige Abgase;
ii) Zuführen von BSV-haltigen Abgasen zu den stickoxidhaltigen Abgasen aus dem ersten Behandlungsabschnitt;
iii) Behandeln des Gemisches aus stickoxidhaltigen Abgasen aus dem ersten Behandlungsabschnitt und den BSV-haltigen Abgasen unter reduktiven Bedingungen in einem zweiten Behandlungsabschnitt zur Reduktion der Stickoxide in den Abgasen, bevorzugt auch bei Anwesenheit von Sauerstoff,
wobei eine Aufteilung der BSV-haltigen Abgase vor Einbringen der Abgase in den ersten Behandlungsabschnitt in einen dem ersten Behandlungsabschnitt zugeführten BSV-haltigen Anteil und in einen den in dem ersten Behandlungsabschnitt erhaltenen stickoxidhaltigen Abgasen nach dem ersten Behandlungsabschnitt unbehandelt zugeführten zweiten BSV-haltigen Anteil erfolgt; und wobei den Abgasen zur Reduktion der Stickoxide vor dem zweiten Behandlungsabschnitt kein externes Reduktionsmittel für die stickoxidarme Oxidation in dem zweiten Behandlungsabschnitt zugeführt wird.

2. Verfahren nach Anspruch 1, **dadurch gekennzeichnet, dass** diese Aufteilung der BSV-haltigen Abgase vor dem Einbringen in den ersten Behandlungsabschnitt und/oder die Zufuhr des BSV-haltigen zweiten Anteils zu den in dem ersten Behandlungsabschnitt erhaltenen stickoxidhaltigen Abgasen mit Hilfe von Ventilen oder Klappen geregelt wird.

3. Verfahren zur stickoxidarmen Oxidation von BSV enthaltenden Abgasen nach einem der Ansprüche 1 bis 2, **dadurch gekennzeichnet, dass** das Behandeln des Gemisches aus stickoxidhaltigen Abgasen aus dem ersten Behandlungsabschnitt und den BSV-haltigen Abgasen unter reduktiven Bedingungen in dem zweiten Behandlungsabschnitt eine Katalysator-vermittelte Behandlung umfasst und/oder dass das BSV-haltige Abgas in dem ersten Behandlungsabschnitt mit Hilfe eines Oxidationskatalysators behandelt und Stickoxide gebildet werden und/oder dass das Behandeln unter reduktiven Bedingungen in dem zweiten Behandlungsabschnitt mit einem Reduktionskatalysator zur Reduktion der Stickoxide erfolgt.

4. Verfahren zur stickoxidarmen Oxidation von BSV enthaltenden Abgasen nach einem der Ansprüche 1 bis 2, **dadurch gekennzeichnet, dass** in dem ersten Behandlungsabschnitt eine thermische Behandlung der BSV-haltigen Abgase durchgeführt wird, bevorzugt bei Anwesenheit von Sauerstoff.

5. Verfahren nach Anspruch 4, **dadurch gekennzeichnet, dass** für das Umsetzen der BSV-haltigen Abgase in dem ersten Behandlungsabschnitt eine Brennkammer (6) zur Oxidation von stickstoffhaltigen Verbindungen unter Bildung von Stickoxiden bereitgestellt wird.

6. Verfahren nach Anspruch 5, **dadurch gekennzeichnet, dass** die Oxidationstemperatur in der Brennkammer (6) größer 800°C ist.

7. Verfahren nach einem der Ansprüche 1 bis 3, **dadurch gekennzeichnet, dass** die in dem zweiten Behandlungsabschnitt erhaltenen Abgase einem Oxidationskatalysator (8) zugeführt werden zur Oxidation von Kohlenwasserstoffen.

8. Verfahren nach einem der Ansprüche 4-7, **dadurch gekennzeichnet, dass** die Reduktion in dem zweiten Behandlungsabschnitt in einer Gasphasenoxidationskammer (7) gegebenenfalls unter Zusatz von Brennstoff erfolgt; und/oder dass die zugeführten BSV-haltigen Abgase koffeinhaltige Abgase sind.

9. Verwendung einer Vorrichtung zur stickoxidarmen Oxidation von Brennstoff-Stickstoff-Verbindungen (BSV) für das Behandeln von Abgasen aus einer Kaffeerösterei
**gekennzeichnet durch**
eine Einrichtung (1) zum Leiten eines ersten Anteils von BSV-haltigen Abgasen durch eine Zuleitung (2) in eine erste Einrichtung (6) zur Umsetzung des ersten Anteils von BSV-haltigen Abgasen in stickoxidhaltige Abgase,
eine Leitung (10) zum Verbringen der behandelten stickoxidhaltigen Abgase zu einer zweiten Einrichtung (7) zur Reduktion der stickoxidhaltigen Abgase, wobei
die Leitung (10) zum Verbringen der stickoxidhaltigen Abgase zu der zweiten Einrichtung (7) eine Vorrichtung zur Beimischung eines an der ersten Einrichtung (6) vorbeigeführten zweiten Anteils von BSV-haltigen Abgasen aufweist, die nicht in der ersten Einrichtung (6) behandelt wurden,
wobei die zweite Einrichtung zur Reduktion der stickoxidhaltigen Abgase ohne externes Reduktionsmittel dient.

10. Verwendung nach Anspruch 9, **dadurch gekennzeichnet, dass** die Vorrichtung Ventile oder Klappen für das Regeln der Aufteilung von BSV-haltigem Abgas in den ersten der ersten Einrichtung (6) zugeführten Anteil und in den an der ersten Einrichtung (6) vorbeigeführten zweiten Anteil aufweist.

11. Verwendung nach einem der Ansprüche 9 bis 10, **dadurch gekennzeichnet, dass** die Vorrichtung zur Beimischung eines an der ersten Einrichtung (6) vorbeigeführten zweiten Anteils von BSV-haltigem Abgas eine fluidische Mischeinrichtung ist; und/oder dass die erste Einrichtung (6) eine Brennkammer ist, die gegebenenfalls Einlässe für Brennstoff und/oder Luft aufweist, oder ein Oxidationskatalysator ist.

12. Verwendung nach einem der Ansprüche 9 bis 11, **dadurch gekennzeichnet, dass** die zweite Einrichtung (7) eine Gasphasenoxidationskammer ist, die gegebenenfalls Einlässe zur Zufuhr von Brennstoff aufweist, oder ein Reduktionskatalysator ist.

## Claims

1. Method for low-nitrogen-oxide oxidation of exhaust gases containing fuel-nitrogen compounds (FNC) from a coffee roasting plant **characterized by** the following steps:
i) supplying FNC-containing exhaust gases to a first treatment portion for conversion into nitrogen-oxide-containing exhaust gases;
ii) supplying FNC-containing exhaust gases to the nitrogen-oxide-containing exhaust gases from the first treatment portion;
iii) treating the mixture of nitrogen-oxide-containing exhaust gases from the first treatment portion and the FNC-containing exhaust gases under reductive conditions in a second treatment portion in order to reduce the nitrogen oxides in the exhaust gases, preferably also in the presence of oxygen,
the FNC-containing exhaust gases being divided, prior to introduction of the exhaust gases into the first treatment portion, into an FNC-containing portion supplied to the first treatment portion and into a second FNC portion which is supplied, untreated, to the nitrogen-oxide-containing exhaust gases obtained in the first treatment portion following the first treatment portion; and the exhaust gases not being supplied with an external reducing agent for the low-nitrogen-oxide oxidation in the second treatment portion in order to reduce the nitrogen oxides before the second treatment portion.

2. Method according to claim 1, **characterized in that** this division of the FNC-containing exhaust gases prior to the introduction into the first treatment portion and/or the supply of the FNC-containing second portion to the nitrogen-oxide-containing exhaust gases obtained in the first treatment portion is controlled by means of valves or flaps.

3. Method for low-nitrogen-oxide oxidation of FNC-containing exhaust gases according to either claim 1 or claim 2, **characterized in that** the treatment of the mixture of nitrogen-oxide-containing exhaust gases from the first treatment portion and the FNC-containing exhaust gases under reductive conditions in the second treatment portion comprises a catalyst-mediated treatment, and/or **in that** the FNC-containing exhaust gas is treated in the first treatment portion by means of an oxidation catalyst and nitrogen oxides are formed, and/or **in that** the treatment takes place under reductive conditions in the second treatment portion using a reduction catalyst for reducing the nitrogen oxides.

4. Method for low-nitrogen-oxide oxidation of FNC-containing exhaust gases according to either claim 1 or claim 2, **characterized in that** in the first treatment portion, thermal treatment of the FNC-containing exhaust gases is carried out, preferably in the presence of oxygen.

5. Method according to claim 4, **characterized in that** a combustion chamber (6) for the oxidation of nitrogen-oxide-containing compounds is provided for the conversion of the FNC-containing exhaust gases in the first treatment portion, with nitrogen oxides being formed.

6. Method according to claim 5, **characterized in that** the oxidation temperature in the combustion chamber (6) is greater than 800°C.

7. Method according to any of claims 1 to 3, **characterized in that** the exhaust gases obtained in the second treatment portion are fed to an oxidation catalyst (8) for the oxidation of hydrocarbons.

8. Method according to any of claims 4-7, **characterized in that** the second treatment portion is reduced in a gas-phase oxidation chamber (7), optionally with the addition of fuel; and/or **in that** the supplied FNC-containing exhaust gases are caffeine-containing exhaust gases.

9. Use of a device for low-nitrogen-oxide oxidation of fuel-nitrogen compounds (FNC) for the treatment of exhaust gases from a coffee roasting plant, **characterized by** a means (1) for conducting a first portion of FNC-containing exhaust gases through a supply line (2) into a first means (6) for converting the first portion of FNC-containing exhaust gases into nitrogen-oxide-containing exhaust gases, a line (10) for transferring the treated nitrogen-oxide-containing exhaust gases to a second means (7) for reducing the nitrogen-oxide-containing exhaust gases, the line (10) for transferring the nitrogen-oxide-containing exhaust gases to the second means (7) having a device for admixing a second portion of FNC-containing exhaust gases guided past the first means (6), which gases were not treated in the first means (6), the second means being used to reduce the nitrogen-oxide-containing exhaust gases without an external reducing agent.

10. Use according to claim 9, **characterized in that** the device has valves or flaps for controlling the division of FNC-containing exhaust gas into the first portion supplied to the first means (6) and into the second portion guided past the first means (6).

11. Use according to either claim 9 or claim 10, **characterized in that** the device for admixing a second portion of FNC-containing exhaust gas guided past the first means (6) is a fluidic mixing means; and/or **in that** the first means (6) is a combustion chamber, which optionally has inlets for fuel and/or air, or is an oxidation catalyst.

12. Use according to any of claims 9 to 11, **characterized in that** the second means (7) is a gas-phase oxidation chamber, which optionally has inlets for supplying fuel, or is a reduction catalyst.

## Revendications

1. Procédé d'oxydation à faible teneur en oxyde d'azote de gaz d'échappement contenant des composés combustible-azote (BSV) provenant d'un torréfacteur de café, **caractérisé par** les étapes suivantes :
i) acheminement de gaz d'échappement contenant des BSV vers une première section de traitement pour la conversion en gaz d'échappement contenant de l'oxyde d'azote ;
ii) acheminement de gaz d'échappement contenant des BSV vers les gaz d'échappement contenant de l'oxyde d'azote provenant de la première section de traitement ;
iii) traitement du mélange de gaz d'échappement contenant de l'oxyde d'azote provenant de la première section de traitement et des gaz d'échappement contenant des BSV dans des conditions de réduction dans une seconde section de traitement pour la réduction des oxydes d'azote dans les gaz d'échappement, de préférence également en présence d'oxygène,
les gaz d'échappement contenant des BSV étant répartis, avant l'introduction des gaz d'échappement dans la première section de traitement, en une proportion contenant des BSV acheminés vers la première section de traitement et en une seconde proportion contenant des BSV acheminés après la première section de traitement, vers les gaz d'échappement contenant de l'oxyde d'azote, obtenus dans la première section de traitement ; et
aucun agent réducteur externe pour l'oxydation à faible teneur en oxyde d'azote n'étant acheminé vers les gaz d'échappement dans la seconde section de traitement, pour la réduction des oxydes d'azote avant la seconde section de traitement.

2. Procédé selon la revendication 1, **caractérisé en ce que** cette répartition des gaz d'échappement contenant des BSV est réglée au moyen de soupapes ou de clapets avant leur introduction dans la première section de traitement et/ou l'acheminement de la seconde proportion contenant des BSV vers les gaz d'échappement contenant de l'oxyde d'azote obtenus dans la première section de traitement.

3. Procédé d'oxydation à faible teneur en oxyde d'azote de gaz d'échappement contenant des BSV selon l'une des revendications 1 à 2, **caractérisé en ce que** le traitement du mélange de gaz d'échappement contenant de l'oxyde d'azote provenant de la première section de traitement et des gaz d'échappement contenant des BSV dans des conditions de réduction dans la seconde section de traitement comprend un traitement par catalyseur et/ou **en ce que** les gaz d'échappement contenant des BSV dans la première section de traitement sont traités à l'aide d'un catalyseur d'oxydation et des oxydes d'azote sont formés et/ou **en ce que** le traitement dans des conditions de réduction est effectué dans la seconde section de traitement à l'aide d'un catalyseur de réduction pour la réduction des oxydes d'azote.

4. Procédé d'oxydation à faible teneur en oxyde d'azote de gaz d'échappement contenant des BSV selon l'une des revendications 1 à 2, **caractérisé en ce qu'**un traitement thermique des gaz d'échappement contenant des BSV est effectué dans la première section de traitement, de préférence en présence d'oxygène.

5. Procédé selon la revendication 4, **caractérisé en ce qu'**une chambre de combustion (6) pour l'oxydation de composés contenant de l'azote est prévue pour la conversion des gaz d'échappement contenant des BSV dans la première section de traitement, de façon à former des oxydes d'azote.

6. Procédé selon la revendication 5, **caractérisé en ce que** la température d'oxydation dans la chambre de combustion (6) est supérieure à 800 °C.

7. Procédé selon l'une des revendications 1 à 3, **caractérisé en ce que** les gaz d'échappement obtenus dans la seconde section de traitement sont acheminés vers un catalyseur d'oxydation (8) pour l'oxydation des hydrocarbures.

8. Procédé selon l'une des revendications 4 à 7, **caractérisé en ce que** la réduction s'effectue dans la seconde section de traitement dans une chambre d'oxydation en phase gazeuse (7), éventuellement avec addition de combustible ; et/ou
**en ce que** les gaz d'échappement contenant des BSV acheminés sont des gaz d'échappement contenant de la caféine.

9. Utilisation d'un dispositif d'oxydation à faible teneur en oxyde d'azote de composés combustible-azote (BSV) pour le traitement de gaz d'échappement provenant d'un torréfacteur de café
**caractérisé par**
un moyen (1) de direction d'une première proportion de gaz d'échappement contenant des BSV à travers une conduite (2) dans un premier moyen (6) de conversion de la première proportion de gaz d'échappement contenant des BSV en gaz d'échappement contenant de l'oxyde d'azote,
une conduite (10) de transport des gaz d'échappement traités contenant de l'oxyde d'azote vers un second moyen (7) de réduction des gaz d'échappement contenant de l'oxyde d'azote,
la conduite (10) de transport des gaz d'échappement contenant du BSV vers le second moyen (7) présentant un dispositif de mélange d'une seconde proportion de gaz d'échappement contenant du BSV menée le long du premier moyen (6), lesquels gaz n'ont pas été traités dans le premier moyen (6),
le second moyen de réduction des gaz d'échappement contenant de l'oxyde d'azote étant utilisé sans agent réducteur externe.

10. Utilisation selon la revendication 9, **caractérisée en ce que** le dispositif comporte des soupapes ou des clapets pour réguler la répartition de gaz d'échappement contenant des BSV en la première proportion acheminée vers le premier appareil (6) et en la seconde proportion menée le long du premier moyen (6).

11. Utilisation selon l'une des revendications 9 à 10, **caractérisée en ce que** le dispositif de mélange d'une seconde proportion de gaz d'échappement contenant des BSV menée le long du premier moyen (6) est un moyen de mélange de fluide ; et/ou
**en ce que** le premier moyen (6) est une chambre de combustion qui présente éventuellement des entrées pour le combustible et/ou l'air, ou est un catalyseur d'oxydation.

12. Utilisation selon l'une des revendications 9 à 11, **caractérisée en ce que** le second moyen (7) est une chambre d'oxydation en phase gazeuse présentant éventuellement des entrées d'acheminement de combustible, ou est un catalyseur de réduction.
